(19)

(11) **EP 3 255 775 B1**

(12) **EUROPEAN PATENT SPECIFICATION**

(45) Date of publication and mention of the grant of the patent:
**02.06.2021 Bulletin 2021/22**

(21) Application number: **15881058.0**

(22) Date of filing: **02.02.2015**

(51) Int Cl.:
***H02M 1/42*** $^{(2007.01)}$ ***H02M 1/15*** $^{(2006.01)}$
***H02M 3/158*** $^{(2006.01)}$

(86) International application number:
**PCT/JP2015/052890**

(87) International publication number:
**WO 2016/125241 (11.08.2016 Gazette 2016/32)**

# (54) POWER CONVERSION DEVICE

STROMWANDLUNGSVORRICHTUNG

DISPOSITIF DE CONVERSION D'ÉNERGIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.12.2017 Bulletin 2017/50**

(73) Proprietor: **Mitsubishi Electric Corporation**
**Chiyoda-ku**
**Tokyo 100-8310 (JP)**

(72) Inventors:
- **TSUKANO, Keiwa**
  **Tokyo 100-8310 (JP)**
- **IWATA, Akihiko**
  **Tokyo 100-8310 (JP)**
- **KUSUBE, Shinsaku**
  **Tokyo 100-8310 (JP)**
- **YUASA, Kenta**
  **Tokyo 100-8310 (JP)**
- **TSUMURA, Akihiro**
  **Tokyo 100-8310 (JP)**

(74) Representative: **Pfenning, Meinig & Partner mbB**
**Patent- und Rechtsanwälte**
**Joachimsthaler Straße 10-12**
**10719 Berlin (DE)**

(56) References cited:
**JP-A- H11 243 646** **JP-A- 2013 009 476**
**JP-A- 2014 064 349** **JP-A- 2014 236 653**
**US-A1- 2012 126 764** **US-A1- 2013 002 215**
**US-A1- 2013 119 961** **US-A1- 2017 201 186**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 255 775 B1

## Description

### Technical Field

The present invention relates to a power converter.

### Background Art

Conventionally, as power converters adapted to drive a motor, those using a rectifier circuit, booster circuit, and smoothing capacitor are known. For example, Patent Literature 1 describes a power converter capable of boosting an AC power supply voltage to any DC voltage by switching operation of a booster circuit. Patent Literature 2 describes a power converter equipped with a smoothing capacitor connected to a high-voltage power supply apparatus via a DC terminal. Patent Literature 3 describes a power converter equipped with a booster circuit and a smoothing capacitor, where the power converter in turn includes a reactor and a switching device. In power converters such as described in Patent Literatures 1 to 3, a smoothed DC voltage is generated from an AC power supply and an inverter circuit is driven by a DC bus voltage.

Patent Literature 4 discloses a DC-DC power conversion apparatus which includes switching elements, an energy transit capacitor and an inductor. The switching elements are controlled to switch in different switching modes according the ratio of the input/output voltages and the direction of the power transmission. Similar DC-DC power conversion apparatuses are disclosed in Patent Literature 5, Patent Literature 6 and Patent Literature 7.

### Citation List

#### Patent Literature

Patent Literature 1: Japanese Unexamined Patent Application Publication No. 2013-121222

Patent Literature 2: International Publication No. WO 11/135621

Patent Literature 3: Japanese Unexamined Patent Application Publication No. 2014-139038

Patent Literature 4: US 2013/0002215 A1

Patent Literature 5: US 2013/0119961 A1

Patent Literature 6: US 2012/0126764 A1

Patent Literature 7: JP 2013-9476 A

### Summary of Invention

#### Technical Problem

However, with power converters such as described in Patent Literatures 1 to 3, when boosting operation stops, the AC power supply voltage rectified by the rectifier circuit is applied directly to the smoothing capacitor. Therefore, there is a problem in that durability of the power converter cannot be ensured since when boosting operation stops, if, for example, the AC power supply voltage becomes imbalanced due to an instantaneous interruption of the power supply or the like, a ripple current flowing into the smoothing capacitor increases, causing the smoothing capacitor to fail.

The present invention has been made to solve the above problem and has an object to reduce a ripple current flowing through a smoothing capacitor of a power converter and ensure durability of the power converter.

#### Solution to Problem

The invention is defined by a power converter according to claim 1. An advantageous aspect of the invention is defined in the dependent claim.

Without prejudice to Article 69 EPC and its Protocol, in the following, only the embodiments that actually fall within the scope of the appended claims are meant to be part of the embodiments of the invention. More particularly, only the second embodiment contains all the features of claim 1 and is the embodiment of the current invention. The first embodiment is an exemplary embodiment not falling within the scope of the current invention.

## Advantageous Effects of Invention

By driving the second switching device according to claim 1, the present invention can reduce a ripple current flowing through the first capacitor (smoothing capacitor) and thereby avoid failure of the first capacitor.

## Brief Description of Drawings

[Fig. 1] Fig. 1 is a schematic circuit diagram showing an example of a power converter 1 according to Embodiment 1 of the present invention.
[Fig. 2] Fig. 2 is an enlarged schematic circuit diagram showing a part of the power converter 1 according to Embodiment 1 of the present invention.
[Fig. 3] Fig. 3 is a circuit diagram showing an example of an equivalent circuit of a circuit of the power converter 1 according to Embodiment 1 of the present invention shown in Fig. 2.
[Fig. 4] Fig. 4 is a flowchart showing an example of a control process of the power converter 1 according to Embodiment 1 of the present invention.
[Fig. 5] Fig. 5 is a flowchart showing an example of a control process of a power converter 1 according to Embodiment 2 of the present invention.

## Description of Embodiments

### Embodiment 1.

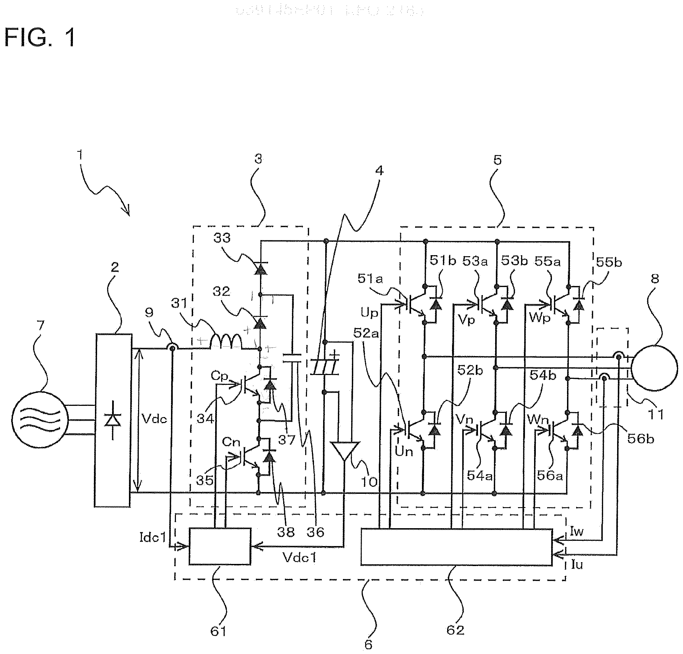

A power converter 1 according to Embodiment 1 of the present invention will be described. Fig. 1 is a schematic circuit diagram showing an example of the power converter 1 according to Embodiment 1. Note that in the following drawings including Fig. 1, components may not be shown in their true size relations or shapes. Also, in the following drawings, same or similar members or parts are denoted by the same reference numerals/characters or reference numerals/characters are omitted.
As shown in Fig. 1, the power converter 1 according to Embodiment 1 includes a rectifier 2, a booster circuit 3, a first capacitor 4, an inverter circuit 5, and a control unit 6. The rectifier 2 rectifies a voltage from an AC power supply 7. The booster circuit 3 is designed to boost a voltage Vdc rectified by the rectifier 2 and is connected in parallel to an output side of the rectifier 2. The first capacitor 4 is designed to smooth the voltage boosted by the booster circuit 3 and is connected in parallel to an output side of the booster circuit 3. The inverter circuit 5 is designed to convert a voltage Vdc1 smoothed by the first capacitor 4 into an alternating voltage and is connected in parallel to the first capacitor 4. The control unit 6 is designed to control at least activation and deactivation of the booster circuit 3 and the inverter circuit 5.
An example of the rectifier 2 is a three-phase full-wave rectifier made up of six bridge-connected rectifier diodes. Note that the AC power supply 7 adapted to supply an alternating voltage to the rectifier 2 is, for example, a 200-Vac or 400-Vac commercial three-phase AC power supply.
An example of the booster circuit 3 is a boost converter circuit (multi-level chopper circuit) adapted to boost the voltage Vdc (bus voltage) rectified by the rectifier 2. The booster circuit 3 boosts a voltage supplied, for example, from a 200-Vac AC power supply 7 and rectified by the rectifier 2 to 350 Vdc or the like.
The booster circuit 3 includes a reactor 31 for boosting, a first diode 32, a second diode 33, a first switching device 34 (upper arm), and a second switching device 35 (lower arm). The reactor 31 is connected in series to an anode side of the rectifier 2. The first diode 32 is connected in series to the reactor 31 in a forward direction. The second diode 33 is connected in series to the first diode 32 in a forward direction and is connected to an anode side of the inverter circuit 5. The first switching device 34 is included in a branching connection extending from between the reactor 31 and first diode 32. The second switching device 35 is connected in series to the first switching device 34 and included in a branching connection to between a cathode side of the rectifier 2 and a cathode side of the inverter circuit unit 5. A second capacitor 36 is included in a branching connection extending from between the first diode 32 and second diode 33 to between the first switching device 34 and second switching device 35.
The reactor 31 is designed to boost the voltage Vdc rectified by the rectifier 2, with inductive reactance.
The first diode 32 and second diode 33 are employed as rectifying devices (hereinafter referred to as "blocking devices") adapted to prevent backflow of current. The first diode 32 and second diode 33 may be, for example, wide band-gap semiconductors, such as silicon carbide (SiC) devices, gallium nitride (GaN) devices, or diamond devices, larger in band gap than silicon (Si) devices. Also, the first diode 32 and second diode 33 may be fast recovery diodes.

The first switching device 34 and second switching device 35 are designed to boost the voltage Vdc rectified by the rectifier 2 when a drive signal with a predetermined duty ratio is input from the control unit 6. The first switching device 34 and second switching device 35 may be, for example, semiconductor devices such as transistors, MOSFETs, or IGBTs, yet are not limited to these semiconductor devices. For example, the first switching device 34 and second switching device 35 may be wide band-gap semiconductors, such as silicon carbide (SiC) devices, gallium nitride (GaN) devices, or diamond devices, larger in band gap than silicon (Si) devices.

Also, with respect to an anode and cathode of the first switching device 34, a third diode 37 as a blocking device may be connected in parallel in reverse polarity. Similarly, with respect to an anode and cathode of the second switching device 35, a fourth diode 38 as a blocking device may be connected in parallel in reverse polarity.

A voltage is applied to the second capacitor 36 when the first switching device 34 is in a deactivated state (i.e., in an OFF state) and the second switching device 35 is in an activated state (i.e., in an ON state).

The first capacitor 4 is designed to operate as a smoothing capacitor for smoothing the voltage boosted by the booster circuit 3 and be charged with electric power boosted by the booster circuit 3.

The inverter circuit 5 is designed to convert the voltage Vdc1 (DC bus voltage) smoothed by the first capacitor 4 into, for example, three-phase AC power and supply the power to a motor 8 (e.g., U phase, V phase, and W phase of a three-phase motor). The inverter circuit 5 includes, for example, inverter switching devices 51a, 52a, 53a, 54a, 55a, and 56a bridge-connected in three phases. Also, the inverter switching devices 51a, 52a, 53a, 54a, 55a, and 56a are connected in parallel, at opposite ends, with respective inverter blocking devices 51b, 52b, 53b, 54b, 55b, and 56b (e.g., flywheel diodes such as rectifier diodes or Schottky barrier diodes) to circulate motor currents flowing backward and thereby protect the inverter switching devices 51a, 52a, 53a, 54a, 55a, and 56a from the motor currents flowing backward. The motor 8 may be configured to be a single-phase motor or a DC brushless motor.

The inverter switching devices 51a, 52a, 53a, 54a, 55a, and 56a may be, for example, semiconductor devices such as IGBTs. For example, the first switching device 34 and second switching device 35 may be wide band-gap semiconductors, such as silicon carbide (SiC) devices, gallium nitride (GaN) devices, or diamond devices, larger in band gap than silicon (Si) devices.

The control unit 6 includes a microcomputer equipped with a CPU, memories (e.g., ROM, RAM, or other memories), an I/O port, and the like. The control unit 6 includes a converter control unit 61 adapted to control the booster circuit 3 and an inverter control unit 62 adapted to control the inverter circuit 5. The converter control unit 61 and inverter control unit 62 may be configured to conduct a mutual data communication.

The converter control unit 61 is designed to generate and output a pulse signal Cp for use to drive the first switching device 34 and a pulse signal Cn for use to drive the second switching device 35, based on a reactor current Idc1 detected by a current detecting unit 9 disposed on the output side of the rectifier 2 and the voltage Vdc1 across the first capacitor 4 detected by an output voltage detecting unit 10.

The inverter control unit 62 is designed to generate pulse signals for use to drive the inverter circuit 5 based on AC currents (e.g., the motor current Iu flowing through the U phase of a three-phase motor and the motor current Iw flowing through the W phase of the three-phase motor) detected by a motor current detecting unit 11. For example, the inverter control unit 62 is designed to generate and output a pulse signal Up for use to drive the inverter switching device 51a, a pulse signal Un for use to drive the inverter switching device 52a, a pulse signal Vp for use to drive the inverter switching device 53a, a pulse signal Vn for use to drive the inverter switching device 54a, a pulse signal Wp for use to drive the inverter switching device 55a, and a pulse signal Wn for use to drive the inverter switching device 56a. Using the pulse signals, the inverter control unit 62 controls frequency of AC power output to the motor 8 from the inverter circuit 5.

Next, operation of the power converter 1 according to Embodiment 1 will be described.

The alternating voltage supplied by the AC power supply 7 is rectified by the rectifier 2 and output to the booster circuit 3. The voltage Vdc rectified by the rectifier 2 is boosted in the booster circuit 3 by switching operation of the first switching device 34 and second switching device 35. The switching operation of the first switching device 34 and second switching device 35 is controlled by the converter control unit 61.

When the first switching device 34 and second switching device 35 are in an activated state (i.e., when the first switching device 34 and second switching device 35 are in ON state), no current flows through the first diode 32 and second diode 33. Thus, the voltage rectified by the rectifier 2 is applied only to the reactor 31.

On the other hand, when the first switching device 34 and second switching device 35 are in a deactivated state (i.e., when the first switching device 34 and second switching device 35 are in OFF state), currents flow through the first diode 32 and second diode 33. Thus, a voltage opposite in direction to the voltage applied when the first switching device 34 and second switching device 35 are in an activated state is induced in the reactor 31.

When the first switching device 34 and second switching device 35 are switched from activated state to deactivated state, energy accumulated in the reactor 31 is transferred to the first capacitor 4 and the voltage Vdc is boosted. Thus, by controlling an ON duty (pulse on/off timing) of the first switching device 34 and second switching device 35, an output voltage of the booster circuit 3 is controlled.

The voltage boosted by the booster circuit 3 is smoothed by the first capacitor 4 and used to charge the first capacitor 4. The voltage Vdc1 smoothed by the first capacitor 4 is converted by the inverter circuit 5 into an AC current with a frequency that is needed by the motor 8. Operation of the inverter circuit 5 is controlled by the inverter control unit 62 and frequency of electric power output from the inverter circuit 5 to a load is controlled in response to a drive signal output by the inverter control unit 62.

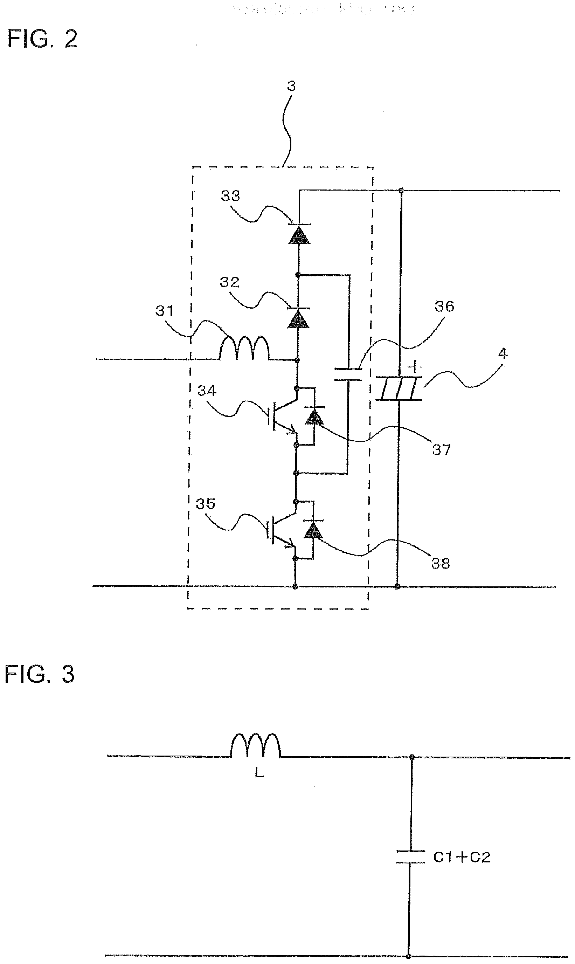

Now, the power converter 1 with the first switching device 34 put in a deactivated state and with the second switching device 35 put in an activated state will be described with reference to Figs. 2 and 3.

Fig. 2 is an enlarged schematic circuit diagram showing a part of the power converter 1 according to Embodiment 1. The circuit diagram of Fig. 2 shows a relation of connection between the booster circuit 3 and first capacitor 4.

Fig. 3 is a circuit diagram showing an example of an equivalent circuit of a circuit of the power converter 1 according to Embodiment 1 shown in Fig. 2. Fig. 3 is an equivalent circuit of the circuit shown in Fig. 2 with the first switching device 34 put in a deactivated state and with the second switching device 35 put in an activated state.

When the first switching device 34 is put in a deactivated state and the second switching device 35 is put in an activated state, the circuit shown in Fig. 2 is equivalent to a circuit resulting from connecting the first capacitor 4 and second capacitor 36 of the booster circuit 3 in parallel to each other. Here, inductance of the reactor 31 is denoted by L, capacitance of the first capacitor 4 is denoted by C2, and capacitance of the second capacitor 36 is denoted by C1. The circuit of Fig. 2 is represented by an equivalent circuit such as shown in Fig. 3 and the capacitance of the capacitor to which the voltage boosted by the booster circuit 3 is applied increases from C2 to C1+C2.

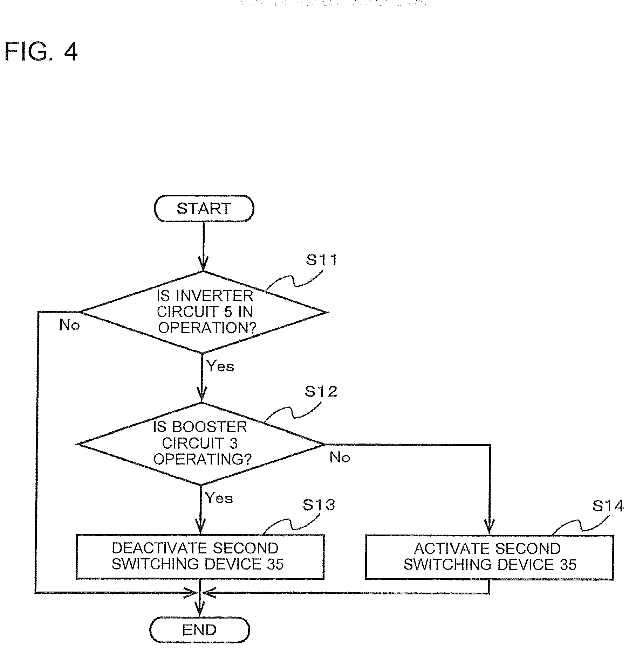

Next, a control process performed by the converter control unit 61 to put the second switching device 35 in an activated state will be described with reference to Fig. 4.

Fig. 4 is a flowchart showing an example of the control process of the power converter 1 according to Embodiment 1. The control process in Fig. 4 may be performed constantly or when power supply imbalance (e.g., an instantaneous interruption of the power supply) is detected.

In step S11, the converter control unit 61 determines whether or not the inverter circuit 5 is in operation. When the inverter circuit 5 is stopped, the control process is finished.

When the inverter circuit 5 is in operation, the converter control unit 61 determines, in step S12, whether or not the booster circuit 3 is operating.

When the booster circuit 3 is operating, a current flowing through the reactor 31 is controlled to be constant in the booster circuit 3, accordingly, the first capacitor 4 is almost unaffected by a ripple current. Therefore, in step S13, the converter control unit 61 controls a pulse to be output to the second switching device 35, putting the second switching device 35 in a deactivated state (OFF state) and finishes the control process.

When the booster circuit 3 is not operating, in step S14, the converter control unit 61 controls the pulse to be output to the second switching device 35, putting the second switching device 35 in an activated state (ON state) and finishes the control process.

As described above, the booster circuit 3 of the power converter 1 according to Embodiment 1, includes the reactor 31, the first diode 32, the second diode 33, the first switching device 34, the second switching device 35, and the second capacitor 36. The second capacitor 36 is included in a branching connection to between the first switching device 34 and second switching device 35 and is connected in parallel to the first capacitor 4 when the first switching device 34 is in a deactivated state and the second switching device 35 is in an activated state. The control unit 6 drives the second switching device 35 when the inverter circuit 5 is operating and the booster circuit 3 is not operating.

According to Embodiment 1, by putting the first switching device 34 in a deactivated state and putting the second switching device 35 in an activated state, the capacitance of the capacitor to which the voltage boosted by the booster circuit 3 is applied increases from C2 to C1+C2. That is, the ripple current flowing through the first capacitor 4 due to voltage unbalance of the AC power supply 7 also flows through the second capacitor 36, resulting in a reduction of the ripple current flowing through the first capacitor 4. Accordingly, a failure of the first capacitor 4 caused by an increased ripple current is avoided and thereby improve durability of the power converter 1.

Conventionally, a power converter equipped with a large-capacity inverter adopts a method whereby a DC bus voltage for driving an inverter is generated through a three-phase full-wave rectifier circuit. For example, the large-capacity inverter is employed to drive motors of a compressor, fan, or the like of an air-conditioning apparatus. The power converters for air-conditioning apparatus are further designed to raise a coefficient of performance (COP) during rated cooling operation or rated heating operation as well as an annual performance factor (APF). For example, when employed in a motor for a compressor, the power converter may be designed such that the level of induced voltage (back electromotive force) generated at the motor rotation speed when the air-conditioning apparatus performs the rated operation becomes approximately equal to the level of the AC power supply voltage.

When a motor of such a design is operated at a rotation speed equal to or higher than that during rated operation of the air-conditioning apparatus, since the inverter cannot output a voltage equal to or higher than the AC power supply voltage, there is an output voltage increase. This increases power loss and decreases energy consumption efficiency.

Also, an operating range may be reduced due to limitations of current or the like.

To solve the above problem, by taking APF, power loss, or the like into consideration, conventionally air-conditioning apparatuses have employed a power converter equipped with a chopper or the like that boosts the rectified bus voltage as required by operating the booster circuit and otherwise stops voltage boosting.

However, with the power converter equipped with such a booster circuit, there is a problem in that if the booster circuit does not operate, an unbalanced AC power supply voltage rectified through a three-phase full-wave rectifier circuit may become a bus voltage, increasing a ripple current flowing into a smoothing capacitor, which might cause breakage of the smoothing capacitor.

According to Embodiment 1, when the booster circuit 3 is operating, the second switching device 35 is controlled to enter a deactivated state. On the other hand, when the booster circuit 3 is not operating, the second switching device 35 is controlled to enter an activated state. Thus, according to Embodiment 1, inhibitory control over ripple currents can be performed effectively by the second switching device 35.

Also, if wide band-gap semiconductor devices are employed for the first diode 32, the second diode 33, the first switching device 34, and the second switching device 35, power loss can be reduced compared to silicon-based semiconductor devices, producing a power converter 1 with reduced energy consumption.

Embodiment 2.

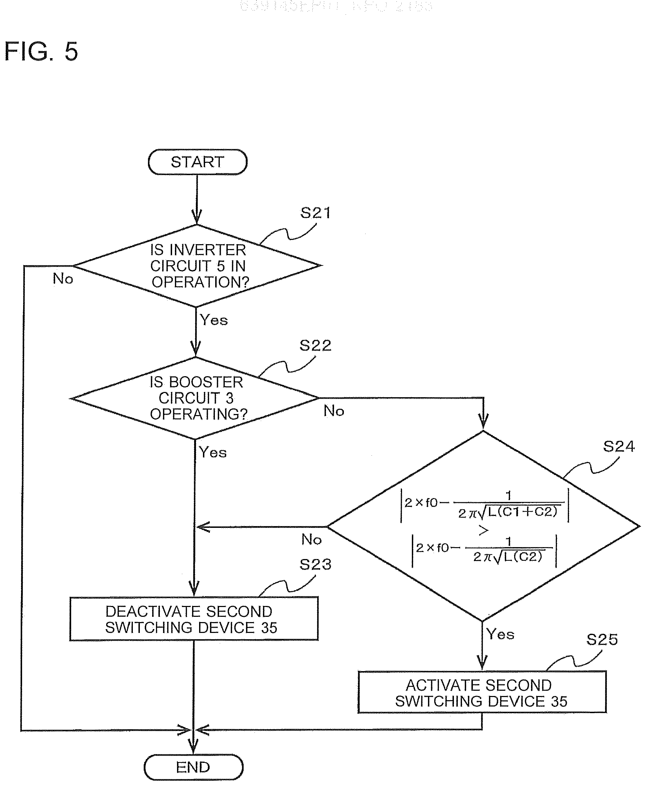

A control process of a power converter 1 according to Embodiment 2 of the present invention will be described with reference to Fig. 5.

Fig. 5 is a flowchart showing an example of a control process of a power converter 1 according to Embodiment 2 of the present invention. As with the control process in Fig. 4, the control process in Fig. 5 may be performed constantly or when power supply imbalance (e.g., an instantaneous interruption of the power supply) is detected. Note the description of the structure and operation of the power converter 1 will be omitted for they are identical to those of Embodiment 1 described above.

In step S21, the converter control unit 61 determines whether or not the inverter circuit 5 is in operation. When the inverter circuit 5 is stopped, the control process is finished. Step S21 is the same control process as step S11 in Fig. 4.

When the inverter circuit 5 is in operation, the converter control unit 61 determines, in step S22, whether or not the booster circuit 3 is operating. Step S22 is the same control process as step S12 in Fig. 4.

When the booster circuit 3 is operating, any ripple current has little influence on the first capacitor 4. Thus, in step S23, the converter control unit 61 controls the pulse to be output to the second switching device 35, putting the second switching device 35 in a deactivated state (OFF state), and thereby finishes the control process. Step S23 is the same control process as step S13 in Fig. 4.

When the booster circuit 3 is not operating, it is determined, in step S24, whether or not power supply frequency f0 of the AC power supply 7 satisfies a condition of expression (1) below,
[Formula 1]

$$\left| 2 \times f0 - \frac{1}{2\pi\sqrt{L(C1+C2)}} \right| > \left| 2 \times f0 - \frac{1}{2\pi\sqrt{L(C2)}} \right| \quad \cdots (1)$$

where L is inductance of the reactor 31, C2 is capacitance of the first capacitor 4, and C1 is capacitance of the second capacitor 36. When the power supply frequency f0 of the AC power supply 7 satisfies the condition of expression (1), in step S25, the converter control unit 61 controls the pulse to be output to the second switching device 35, putting the second switching device 35 in an activated state (ON state), and thereby finishes the control process. When the condition of expression (1) is not satisfied, in step S23, the converter control unit 61 controls the pulse to be output to the second switching device 35, putting the second switching device 35 in a deactivated state (OFF state), and thereby finishes the control process.

Embodiment 2 is based on a phenomenon in which ripple current caused by voltage unbalance of the AC power supply 7 increases more greatly as a frequency component twice as large as the power supply frequency f0 of the AC power supply 7 approaches a resonance frequency of the reactor 31 and first capacitor 4. In Embodiment 2, when the power supply frequency f0 of the AC power supply 7 satisfies a relationship of expression (1) above, control is performed to put the second switching device 35 in an activated state. Thus, according to Embodiment 2, when ripple current increases greatly, the ripple current flowing through the first capacitor 4 can be reduced effectively.

Other embodiments.

The present invention is not limited to the embodiments described above, and various modifications within the scope of the appended claims are possible. For example, the above embodiments are applicable not only to the air-conditioning apparatus cited as an example, but also to heat pump apparatus of showcases, freezers, refrigerators, and the like.

Also, the embodiments described above may be used in combination.

Reference Signs List

1 power converter 2 rectifier 3 booster circuit 4 first capacitor 5 inverter circuit 6 control unit 7 AC power supply 8 motor 9 current detecting unit 10 output voltage detecting unit 11 motor current detecting unit 31 reactor 32 first diode 33 second diode 34 first switching device 35 second switching device 36 second capacitor 37 third diode 38 fourth diode 51a, 52a, 53a, 54a, 55a, 56a inverter switching device 51b, 52b, 53b, 54b, 55b, 56b inverter blocking device 61 converter control unit 62 inverter control unit

## Claims

**1.** A power converter (1) comprising:

a rectifier (2) configured to rectify a voltage from an alternating-current power supply (7);
a booster circuit (3) connected in parallel to an output side of the rectifier (2) and configured to boost the voltage rectified by the rectifier (2);
a first capacitor (4) connected in parallel to an output side of the booster circuit (3), and configured to smooth the voltage boosted by the booster circuit (3);
an inverter circuit (5) connected in parallel to the first capacitor (4) and configured to convert the voltage smoothed by the first capacitor (4) into an alternating voltage; and
a control unit (6) configured to control at least activation and deactivation of the booster circuit (3) and the inverter circuit (5),
wherein the booster circuit (3) includes

a reactor (31) connected in series to an anode side of the rectifier (2),
a first diode (32) connected in series to the reactor (31) in a forward direction,
a second diode (33) connected in series to the first diode (32) in a forward direction and connected to an anode side of the inverter circuit (5),
a first switching device (34) included in a branching connection extending from between the reactor (31) and the first diode (32),
a second switching device (35) connected in series to the first switching device (34) and included in a branching connection to between a cathode side of the rectifier (2) and a cathode side of the inverter circuit (5), and
a second capacitor (36) included in a branching connection extending from between the first diode (32) and the second diode (33) to between the first switching device (34) and the second switching device (35),

wherein the control unit (6) is configured to:

control activation and deactivation of the second switching device (35) in response to power supply frequency (f0) of the alternating-current power supply (7), such that
when the inverter circuit (5) is operating, no boosting is being operated by the booster circuit (3), and the power supply frequency (f0) of the alternating-current power supply (7) satisfies a formula:

$$\left|2\times f0-\frac{1}{2\pi\sqrt{L(C1+C2)}}\right|>\left|2\times f0-\frac{1}{2\pi\sqrt{L(C2)}}\right|$$

where L is inductance of the reactor (31), C2 is capacitance of the first capacitor (4), and C1 is capacitance of the second capacitor (36),
switch the second switching device (35) in an activate state and connect the second capacitor (36) in parallel to the first capacitor (4), and
when the inverter circuit (5) is operating, no boosting is being operated by the booster circuit (3), and the power supply frequency (f0) of the alternating-current power supply (7) does not satisfy the formula,
put the second switching device (35) in a deactivated state.

2. The power converter (1) of claim 1 wherein the first diode (32), the second diode (33), the first switching device (34), and the second switching device (35) are wide band-gap semiconductor devices.

## Patentansprüche

1. Stromwandler (1), umfassend:

einen Gleichrichter (2), dazu ausgelegt, eine Spannung von einer Wechselstromenergiequelle (7) gleichzurichten;
eine Hochsetzschaltung (3), parallel an eine Ausgangsseite des Gleichrichters (2) angeschlossen und dazu ausgelegt, die von dem Gleichrichter (2) gleichgerichtete Spannung zu erhöhen;
einen ersten Kondensator (4), parallel an eine Ausgangsseite der Hochsetzschaltung (3) angeschlossen und dazu ausgelegt, die von der Hochsetzschaltung (3) erhöhte Spannung zu glätten;
eine Wechselrichterschaltung (5), parallel an den ersten Kondensator (4) angeschlossen und dazu ausgelegt, die von dem ersten Kondensator (4) geglättete Spannung in eine Wechselspannung umzuwandeln; und
eine Steuereinheit (6), dazu ausgelegt, mindestens Aktivierung und Deaktivierung der Hochsetzschaltung (3) und der Wechselrichterschaltung (5) zu steuern,
wobei die Hochsetzschaltung (3) umfasst

eine Induktivität (31), in Reihe an eine Anodenseite des Gleichrichters (2) angeschlossen,
eine erste Diode (32), in Reihe an die Induktivität (31) in einer Vorwärtsrichtung angeschlossen,
eine zweite Diode (33), in Reihe an eine erste Diode (32) in einer Vorwärtsrichtung angeschlossen und an eine Anodenseite der Wechselrichterschaltung (5) angeschlossen,
eine erste Schaltvorrichtung (34), enthalten in einer abzweigenden Verbindung, die sich von zwischen der Induktivität (31) und der ersten Diode (32) erstreckt,
eine zweite Schaltvorrichtung (35), in Reihe an die erste Schaltvorrichtung (34) angeschlossen und in einer abzweigenden Verbindung zu zwischen einer Kathodenseite (2) des Gleichrichters und einer Kathodenseite der Wechselrichterschaltung (5) enthalten, und
einen zweiten Kondensator (36), enthalten in einer abzweigenden Verbindung, die sich erstreckt zwischen der ersten Diode (32) und der zweiten Diode (33) zu zwischen der ersten Schaltvorrichtung (34) und der zweiten Schaltvorrichtung (35),

wobei die Steuerseinheit (6) ausgelegt ist zum:

Steuern der Aktivierung und Deaktivierung der zweiten Schaltvorrichtung (35) in Reaktion auf Energieversorgungsfrequenz (f0) der Wechselstromenergiequelle (7), sodass
dann, wenn die Wechselrichterschaltung (5) arbeitet, durch die Hochsetzschaltung (3) keine Erhöhung betrieben wird, und die Energieversorgungsfrequenz (f0) der Wechselstromenergiequelle (7) einer Formel entspricht:

$$\left|2\times f0-\frac{1}{2\pi\sqrt{L(C1+C2)}}\right|>\left|2\times f0-\frac{1}{2\pi\sqrt{L(C2)}}\right|,$$

wobei L die elektrische Induktivität der Induktivität (31) ist, C2 die Kapazität des ersten Kondensators (4) ist, und C1 die Kapazität des zweiten Kondensators (36) ist,

Schalten der zweiten Schaltvorrichtung (35) in einen Aktivierungszustand und paralleles Verbinden des zweiten Kondensators (36) mit dem ersten Kondensator (4), und
dann, wenn die Wechselrichterschaltung (5) arbeitet, durch die Hochsetzschaltung (3) keine Erhöhung betrieben wird, und die Energieversorgungsfrequenz (f0) der Wechselstromenergiequelle (7) nicht der Formel entspricht,
Setzen der zweiten Schaltvorrichtung (35) in einen deaktivierten Zustand.

2. Stromwandler (1) nach Anspruch 1, wobei die erste Diode (32), die zweite Diode (33), die erste Schaltvorrichtung (34) und die zweite Schaltvorrichtung (35) Halbleitervorrichtungen mit breiter Bandlücke sind.

## Revendications

1. Convertisseur d'énergie (1) comprenant :

un redresseur (2) conçu pour redresser une tension à partir d'une alimentation en courant alternatif (7) ;
un circuit élévateur de tension (3) connecté en parallèle à un côté sortie du redresseur (2) et conçu pour élever la tension redressée par le redresseur (2) ;
un premier condensateur (4) connecté en parallèle à un côté sortie du circuit élévateur de tension (3), et conçu pour lisser la tension élevée par le circuit élévateur de tension (3) ;
un circuit inverseur (5) connecté en parallèle au premier condensateur (4) et conçu pour convertir la tension lissée par le premier condensateur (4) en une tension alternative ; et
une unité de commande (6) conçue pour commander au moins l'activation et la désactivation du circuit élévateur de tension (3) et du circuit inverseur (5),
dans lequel le circuit élévateur de tension (3) comprend

une bobine de réactance (31) connectée en série à un côté anode du redresseur (2),
une première diode (32) connectée en série à la bobine de réactance (31) dans une direction vers l'avant,
une seconde diode (33) connectée en série à la première diode (32) dans une direction vers l'avant et connectée à un côté anode du circuit inverseur (5),
un premier dispositif de commutation (34) compris dans une connexion de raccord s'étendant à partir d'entre la bobine de réactance (31) et la première diode (32),
un second dispositif de commutation (35) connecté en série au premier dispositif de commutation (34) et compris dans une connexion de raccord jusqu'entre un côté cathode du redresseur (2) et un coté cathode du circuit inverseur (5), et
un second condensateur (36) compris dans une connexion de raccord s'étendant à partir d'entre la première diode (32) et la seconde diode (33) jusqu'entre le premier dispositif de commutation (34) et le second dispositif de commutation (35),

dans lequel l'unité de commande (6) est conçue pour :

l'activation et la désactivation de la commande du second dispositif de commutation (35) en réponse à la fréquence d'alimentation (f0) de l'alimentation en courant alternatif (7), de sorte que
lorsque le circuit inverseur (5) fonctionne, aucune élévation n'est effectuée par le circuit élévateur de tension (3), et la fréquence d'alimentation (f0) de l'alimentation en courant alternatif (7) satisfait à la formule :

$$\left|2\times f0-\frac{1}{2\pi\sqrt{L(C1+C2)}}\right|>\left|2\times f0-\frac{1}{2\pi\sqrt{L(C2)}}\right|,$$

où L est l'inductance de la bobine de réactance (31), C2 est la capacité du premier condensateur (4), et C1 est la capacité du second condensateur (36),

commuter le second dispositif de commutation (35) dans un état activé et connecter le second condensateur (36) en parallèle au premier condensateur (4), et
lorsque le circuit inverseur (5) fonctionne, aucune élévation n'est effectuée par le circuit élévateur de tension (3), et la fréquence d'alimentation (f0) de l'alimentation en courant alternatif (7) ne satisfait pas la formule,
placer le second dispositif de commutation (35) dans un état désactivé.

2. Convertisseur d'énergie (1) selon la revendication 1 dans lequel la première diode (32), la seconde diode (33), le premier dispositif de commutation (34), et le second dispositif de commutation (35) sont des dispositifs à semiconducteur à large bande interdite.

FIG. 1

1
3
4
5
2
7
8
9
31
32
33
Cp
34
Cn
35
37
38
36
Vdc
10
51a
51b
53a
53b
55a
55b
Up
Vp
Wp
52a
52b
54b
Un
Vn
Wn
54a
56a
56b
11
Idc1
Vdc1
Iw
Iu
61
6
62

FIG. 2

3
33
32
31
36
4
+
34
37
35
38

FIG. 3

L
C1+C2

FIG. 4

START
S11
IS INVERTER CIRCUIT 5 IN OPERATION?
No
Yes
S12
IS BOOSTER CIRCUIT 3 OPERATING?
No
Yes
S13
DEACTIVATE SECOND SWITCHING DEVICE 35
S14
ACTIVATE SECOND SWITCHING DEVICE 35
END

FIG. 5

START
S21
IS INVERTER CIRCUIT 5 IN OPERATION?
No
Yes
S22
IS BOOSTER CIRCUIT 3 OPERATING?
No
Yes
S24
$\left|2\times f0-\frac{1}{2\pi\sqrt{L(C1+C2)}}\right| > \left|2\times f0-\frac{1}{2\pi\sqrt{L(C2)}}\right|$
No
Yes
S23
DEACTIVATE SECOND SWITCHING DEVICE 35
S25
ACTIVATE SECOND SWITCHING DEVICE 35
END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013121222 A
- WO 11135621 A
- JP 2014139038 A
- US 20130002215 A1
- US 20130119961 A1
- US 20120126764 A1
- JP 2013009476 A